# EUROPÄISCHE PATENTSCHRIFT

(11) **EP 1 035 937 B1**
(45) Veröffentlichungstag und Bekanntmachung des Hinweises auf die Patenterteilung: **19.06.2002**
(21) Anmeldenummer: 98955540.4
(22) Anmeldetag: 04.11.1998
(51) Int. Cl.: B23D 59/02, B25F 5/02, B23D 45/16

(54) **HANDFÜHRBARES TRENNGERÄT, INSBESONDERE HANDKREISSÄGE, MIT IM HANDGRIFF INTEGRIERTEM SCHNEIDFLÜSSIGKEITSVORRATSRAUM**
HAND-GUIDED CUTTING DEVICE, ESPECIALLY A MANUAL CIRCULAR SAW, WITH A CUTTING COOLANT STORAGE AREA WHICH IS INTEGRATED IN THE HANDLE
APPAREIL DE COUPE POUVANT ETRE COMMANDE A LA MAIN, EN PARTICULIER SCIE CIRCULAIRE MANUELLE, COMPORTANT UNE CHAMBRE DE RESERVE DE LIQUIDE DE COUPE INTEGREE A LA POIGNEE

(30) Priorität: 05.11.1997 DE 29719678 U; 02.03.1998 DE 29803600 U
(43) Veröffentlichungstag der Anmeldung: 20.09.2000
(73) Patentinhaber: Powertools International Gmbh, 25474 Ellerbek (DE)
(72) Erfinder: MÜNNEKEHOFF, Gerd, D-42857 Remscheid (DE); WOLTER, Bernd, D-42897 Remscheid (DE)
(74) Vertreter: Zapf, Christoph, Dipl.-Ing.
(86) Internationale Anmeldenummer: EP9807042
(87) Internationale Veröffentlichungsnummer: WO9924202

(56) Entgegenhaltungen:
- DE-A- 2 157 176
- DE-A- 4 236 964
- DE-C- 649 968
- DE-C- 19 538 762
- JP-A- 60 073 801
- US-A- 2 555 428
- US-A- 3 886 658

## Beschreibung

Die vorliegende Erfindung betrifft ein handführbares Trenngerät, insbesondere eine Handkreissäge, mit einem motorischen Antriebsteil und einem kreisscheibenförmigen, rotierend antreibbaren Trennelement sowie mit einer Einrichtung zum Zuführen einer Schneidflüssigkeit aus einem Vorratsraum in einen Arbeitsbereich am Umfang des Trennelementes, wobei der Vorrafsraum für die Schneidflüssigkeit in einen Handgriff des Antriebsteils integriert ist, siehe JP 60-73801.

Es ist eine Handkreissäge bekannt, bei der das Trennelement als Doppel-Kreissägeblatt aus zwei parallelen, gegensinnig rotierenden Teilsägeblättern ausgebildet ist. Dieses bekannte Gerät hat sich im wesentlichen gut bewährt, weil aufgrund der gegensinnig rotierenden Teilsägeblätter nur sehr geringe Reaktionskräfte bei der Anwendung entstehen, so daß das Gerät gut von Hand geführt werden kann. Für bestimmte Anwendungen, insbesondere zum Sägen von Metallen, wie Aluminium, ist es zweckmäßig, eine Schneidflüssigkeit einzusetzen, die üblicherweise aus einer Öl-Wasser-Emulsion besteht. Bei dem bekannten Gerät muß hierzu eine Vorratsflasche extern am Gehäuse des Antriebsteils gehaltert werden. Dies kann beim Einsatz des Gerätes insofern ungünstig sein, als es zu Kollisionen zwischen der außen überstehenden Vorratsflasche und dem jeweils zu trennenden Werkstück und/oder umliegenden, im Arbeitsbereich liegenden Teilen kommen kann. Ferner muß zum Betätigen jeweils ein kurzer Druck auf die Vorratsflasche erfolgen, wozu die Bedienungsperson eine Hand vom jeweiligen Handgriff wegnehmen muß. Dies könnte eventuell sogar zu gefährlichen Situationen führen.

Der vorliegenden Erfindung liegt daher die Aufgabe zugrunde, ein Trenngerät der gattungsgemäßen Art zu schaffen, welches eine kompakte und ergonomisch günstige Bauform aufweist und eine sichere und komfortable Bedienung ermöglicht.

Erfindungsgemäß wird dies dadurch erreicht, daß der Handgriff eine integrierte Druckpumpe mit einem Betätigungselement zum bedarfsweisen Überführen jeweils einer bestimmten, dosierten Portion der Schneidflüssigkeit aus dem integrierten Vorratsraum zum Arbeitsbereich des Trennelementes aufweist, wobei die Einrichtung zum Zuführen der Schneidflüssigkeit ein integriertes Rückschlagventil derart aufweist, daß eine eventuelle Rücksaugwirkung der Druckpumpe zur Dosierung der Schneidflüssigkeit kompensiert wird. Es entfällt somit vorteilhafterweise die bisher erforderliche Vorratsflasche, so daß überstehende und eventuell beim Betrieb störende Teile vermieden werden. Zudem weist der Handgriff in bevorzugter Ausgestaltung ein integriertes Betätigungselement zum bedarfsweisen dosierten (portionsweisen) Überführen der Schneidflüssigkeit aus dem integrierten Vorratsraum zum Arbeitsbereich des Trennelementes auf. Hierdurch wird ein sehr hoher Bedienungskomfort erreicht, indem die Bedienungsperson die Hand am Handgriff belassen und das Betätigungselement beispielsweise mit dem Daumen betätigen kann. Hierzu ist das Betätigungselement zweckmäßigerweise durch einen Druckknopf gebildet, der in einer ergonomischen Ausgestaltung in dem Bereich des Handgriffs angeordnet ist, der leicht mit dem Daumen erreichbar ist. Mit dem Druckknopf kann eine integrierte Druckpumpe betätigt werden, die nach Art einer Zerstäuberpumpe oder eines Dosierspenders ausgebildet ist. Damit kann bedarfsweise jeweils eine bestimmte Portion der Schneidflüssigkeit aus dem integrierten Vorratsraum in den Arbeitsbereich des Trennelementes überführt werden.

Weitere vorteilhafte Ausgestaltungsmerkmale der Erfindung sind in den Unteransprüchen sowie der folgenden Beschreibung enthalten.

Anhand von in der Zeichnung veranschaulichten, bevorzugten Ausführungsbeispielen soll im folgenden die Erfindung näher erläutert werden. Dabei zeigen:
- Fig. 1: eine Perspektivansicht eines erfindungsgemäßen Trenngerätes,
- Fig. 2: eine teilgeschnittene Vorderansicht in Pfeilrichtung II gemäß Fig. 1 des Handgriffs des erfindungsgemäßen Trenngerätes in einer ersten Ausführungsform,
- Fig. 3: eine teilgeschnittene Frontansicht einer zweiten Ausführungsform eines erfindungsgemäßen Trenngerätes,
- Fig. 4: eine teilgeschnittene Aufsicht des erfindungsgemäßen Trenngerätes gemäß Fig. 3,
- Fig. 5: eine Schnittdarstellung analog zu Fig. 3, allerdings nur des Bereichs des Handgriffs in einer weiteren Ausführungsform, und
- Fig. 6: eine gesonderte Detail-Schnittansicht einer gemäß Fig. 5 verwendeten, speziellen Druckpumpe.

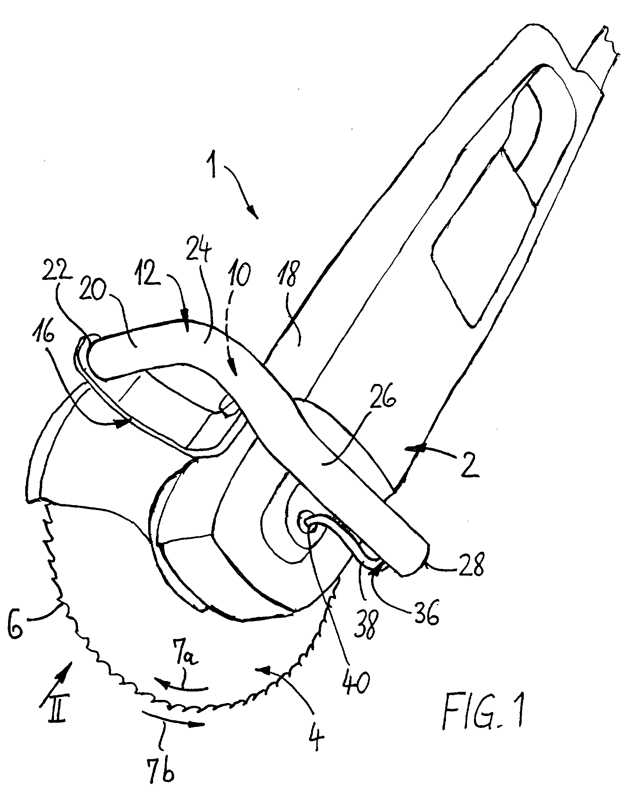

Bei dem ersten, in Fig. 1 dargestellten Ausführungsbeispiel ist ein von Hand führbares Trenngerät 1 als Handkreissäge ausgebildet. Das Trenngerät 1 besteht aus einem motorischen, insbesondere elektromotorischen Antriebsteil 2 und einem kreisscheibenförmigen, rotierend antreibbaren Trennelement 4. Bei der bevorzugten Ausführungsform ist das Trennelement 4 - in an sich bekannter Weise - als Doppel-Kreissägeblatt 6 aus zwei parallelen, gegensinnig rotierenden Teilsägeblättern ausgebildet. Die beiden Teilsägeblätter sind in Fig. 1 nicht gesondert erkennbar, jedoch werden ihre gegensinnigen Rotationsrichtungen durch Pfeile 7a und 7b angedeutet.

Das Trenngerät 1 ähnelt von seiner Bauform her insofern einem Winkelschleifer, als der Antriebsteil 2 eine längliche Form aufweist und in einem, und zwar dem vorderen Endbereich das Trennelement 4 um eine sich quer, senkrecht zur Längserstreckung des Antriebsteils 2 erstreckende Rotationsachse geführt ist.

Für bestimmte Einsatzzwecke, insbesondere zum Sägen von Metallen, wie beispielsweise Aluminium, ist eine Einrichtung zum Zuführen von Schneidflüssigkeit in einen Arbeitsbereich am Außenumfang des Trennelementes 4 vorgesehen.

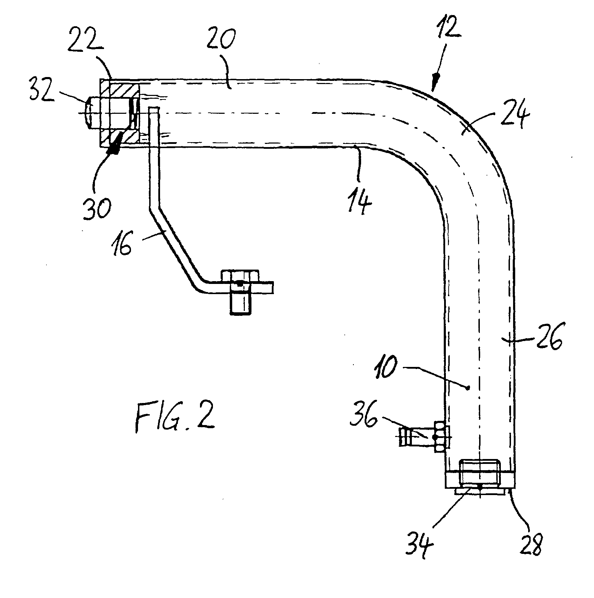

Hierzu ist erfindungsgemäß vorgesehen, daß ein Vorratsraum 10 - siehe Fig. 2 - für die Schneidflüssigkeit in einen Handgriff 12 des Antriebsteils 2 integriert ist. Bei dem Handgriff 12 handelt es sich um einen Führungsgriff, der im vorderen, dem Trennelement 4 benachbarten Bereich des Antriebsteils 2 angeordnet ist. Dieser Handgriff 12 wird zweckmäßigerweise von einem einfachen Rohrstück 14 gebildet (Fig. 2), dessen Rohr-Innenvolumen den Vorratsraum 10 bildet. Dieses Rohrstück 14 wird über ein Halteteil 16 außen an einem Gehäuse 18 des Antriebsteils 2 befestigt. Dabei erstreckt sich ein erster Griffabschnitt 20 ausgehend von seinem ersten, in der Nähe des Außenumfangs des Trennelementes 4 liegenden Griffende 22 etwa parallel zu der Rotationsachse des Trennelementes 4 von diesem weg. Vorzugsweise geht der erste Griffabschnitt 20 über eine Biegung 24 von insbesondere etwa 90° in einen sich senkrecht zur Rotationsachse erstreckenden, wie dargestellt vorzugsweise etwa diametral zum Trennelement 4 verlaufenden zweiten Griffabschnitt 26 über. Der Handgriff 12 ist im Bereich seines ersten Griffendes 22 über das als Haltewinkel ausgebildete Halteteil 16 am Gehäuse 18 befestigt, während der zweite Griffabschnitt 26 in einem freien Griffende 28 ausläuft. Der mit Abstand seitlich auf der dem Trennelement 4 axial abgekehrten Seite neben dem Gehäuse 18 verlaufende zweite Griffabschnitt 26 dient zur Ablage des Gerätes, indem er das Gerät so abstützt, daß das eventuell noch rotierende Trennelement 4 sicher vom jeweiligen Untergrund beabstandet ist.

Wie sich aus Fig. 2 ergibt, weist der Handgriff 12 ein integriertes Betätigungselement 30 auf, mit dem bei Bedarf jeweils eine dosierte Portion der Schneidflüssigkeit aus dem integrierten Vorratsraum 10 zum Arbeitsbereich des Trennelementes 4 überführt werden kann. Dieses Betätigungselement 30 arbeitet nach dem Prinzip einer handelsüblichen Zerstäuberpumpe bzw. eines Dosierspenders und besitzt hierzu einen Druckknopf 32, der vorzugsweise stirnseitig am ersten Griffende 22 angeordnet ist. Hierdurch ist der Druckknopf 32 sehr gut und komfortabel mit dem Daumen derjenigen Hand erreichbar, die den Handgriff 12 führt.

Gemäß Fig. 2 weist der Handgriff 12 weiterhin eine mit einem insbesondere verschraubbaren Verschlußstück 34 mediendicht verschließbare Füllöffnung auf, die insbesondere stirnseitig am freien Griffende 28 angeordnet ist.

Der Handgriff 12 besitzt ferner einen Auslaß 36, der zweckmäßigerweise von einem Anschlußstutzen für eine Verbindungsleitung 38 (s. Fig. 1) gebildet wird. Zweckmäßigerweise ist der Auslaß 36 im Endbereich des zweiten Griffabschnittes 26 senkrecht zu dessen Längserstreckung und insbesondere in der Nähe der Rotationsachse, dieser etwa gegenüberliegend angeordnet. Über die - insbesondere flexible - Verbindungsleitung 38 ist der Auslaß 36 mit einem Zuführanschluß 40 des Antriebsteils 2 verbunden. Dieser Zuführanschluß 40 ist zentrisch in Verlängerung der Rotationsachse am Antriebsteil 2 angeordnet und geht in einen in der Zeichnung nicht erkennbaren, zentrischen, axialen Kanal sowie weiterhin in mindestens eine radiale Ausströmöffnung im Bereich des Trennelementes 4 über. Aufgrund der kurzen Distanz zwischen dem Zuführanschluß 40 des Antriebsteils 2 und dem etwa axial gegenüberliegenden Auslaß 36 ist vorteilhafterweise eine nur sehr kurze Verbindungsleitung 38 notwendig. Dies ist für den praktischen Einsatz ein besonderer Vorteil, weil die Gefahr eines Hängenbleibens der Verbindungsleitung 38 an umliegenden Teilen außerordentlich gering ist.

Bei der bevorzugten Ausführungsform mit Doppel-Kreissägeblatt 6 sind zwei gegensinnig rotierende Antriebswellen vorgesehen, durch die hindurch sich ein axialer Kanal erstreckt, über den die Schneidflüssigkeit derart vom Zentrum her zwischen die Teilsägeblätter zugeführt wird, daß es nachfolgend selbsttätig fliehkraftbedingt zwischen den Teilsägeblättern radial nach außen in den Arbeitsbereich gelangt.

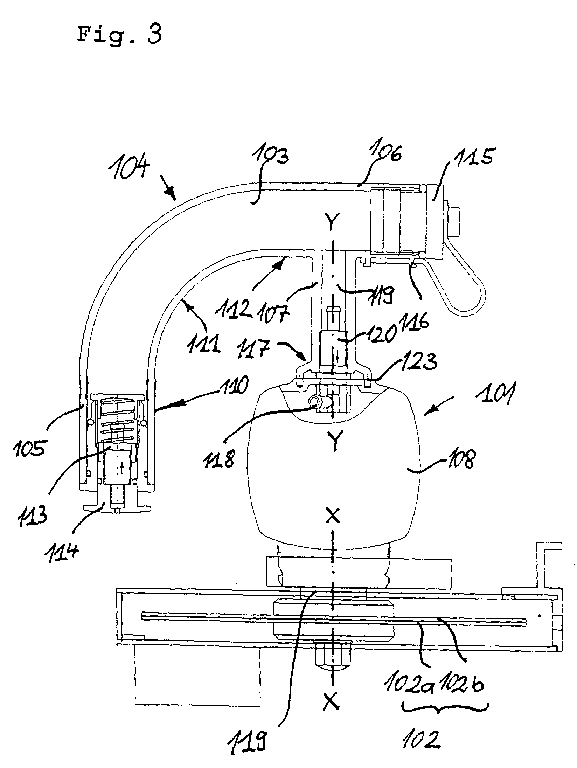

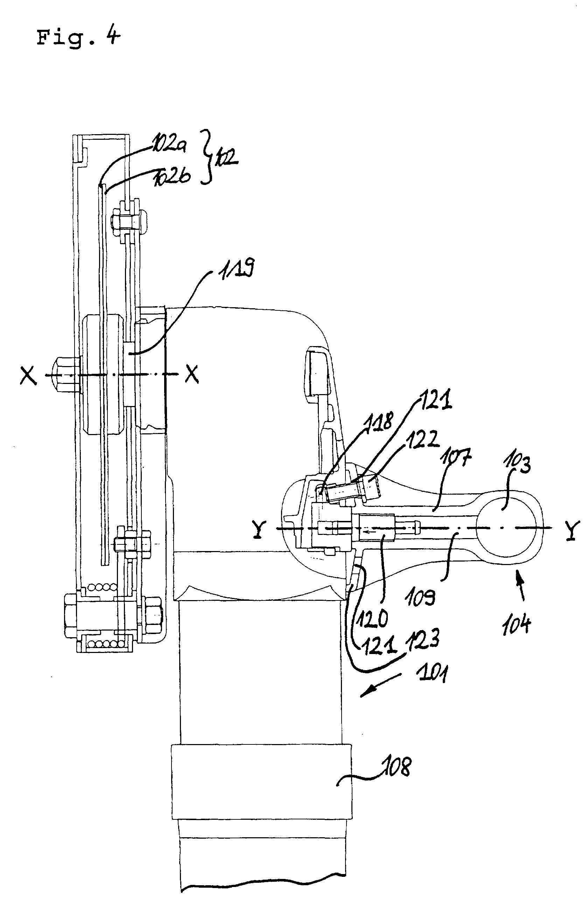

Bei der Ausführung nach Fig. 3 und 4 ist der Handgriff von einem außen an dem Gehäuse des Antriebsteils befestigten Rohrstück gebildet, dessen Rohr-Innenvolumen wiederum den Vorratsraum bildet, jedoch über ein Anschlußstück, welches einen mit dem Vorratsraum verbundenen Zuführkanal für die Schneidflüssigkeit aufweist, am Gehäuse des Antriebsteils befestigt ist. Die Fertigung des Handgriffs aus dem Rohrstück läßt sich dabei in technologisch wenig aufwendiger Weise realisieren. Das insbesondere im Bereich eines der Rohrenden des Handgriffes befindliche Anschlußstück erfüllt mit Vorteil gleichzeitig zwei unterschiedliche Funktionen: Einerseits dient es zur, vorzugsweise starren, Befestigung des Handgriffes am Gehäuse, andererseits kann über den mit dem Vorratsraum verbundenen Zuführkanal des Anschlußstückes die Schneidflüssigkeit transportiert werden, wobei zu diesem Zweck keine störenden bzw. unter Umständen eine Unfallgefahr darstellenden externen Schläuche am erfindungsgemäßen Trenngerät vorgesehen werden müssen.

Wie sich nun aus Fig. 3 und 4 ergibt, ist der Handgriff 104 von einem einfachen Rohrstück gebildet, dessen Rohr-Innenvolumen den Vorratsraum 103 formt. Dieses Rohrstück ist über ein vorzugsweise im Bereich eines seiner Rohrenden 105, 106 befindliches Anschlußstück 107 am Gehäuse 108 des Antriebsteils 101 befestigt. Das Anschlußstück 107 weist einen mit dem Vorratsraum 103 verbundenen Zuführkanal 109 für die Schneidflüssigkeit auf und ist bevorzugtermaßen ein starres Bauteil, das auch einstückig mit dem Rohrstück ausgeführt sein kann. Überhaupt besteht technologisch die vorteilhafte Möglichkeit, den ganzen Handgriff 104 als ein aus Kunststoff bestehendes Spritzguß- oder als Leichtmetall-Druckguß-Teil herzustellen.

Ein erster Griffabschnitt 110 des Handgriffs 104 erstreckt sich, ausgehend von seinem ersten, in der Nähe des Außenumfangs des Trennelementes 102 liegenden Rohrende 105 etwa parallel zur Rotationsachse X-X des Trennelementes 102 von diesem weg. Vorzugsweise geht der erste Griffabschnitt 110 über eine Biegung 111 von insbesondere etwa 90° in einen sich senkrecht zur Rotationsachse X-X erstreckenden, wie dargestellt vorzugsweise etwa diametral zum Trennelement 102 verlaufenden, zweiten Griffabschnitt 112 über.

Der Handgriff 104 läuft im Bereich des ersten Griffabschnittes 110 in das erste, freie, Rohrende 105 aus, während der zweite Griffabschnitt 112 im Bereich des zweiten Rohrendes 106 über das Anschlußstück 107 am Gehäuse 108 befestigt ist. Der mit Abstand seitlich auf der dem Trennelement 102 axial abgekehrten Seite neben dem Gehäuse 108 verlaufende zweite Griffabschnitt 112 dient zur Ablage des Gerätes, indem er das Gerät so abstützt, daß das eventuell noch rotierende Trennelement 102 sicher vom jeweiligen Untergrund beabstandet ist.

Wie sich aus Fig. 3 ergibt, weist der Handgriff 104 ein integriertes Betätigungselement 113 auf, mit dem bei Bedarf jeweils eine dosierte Portion der Schneidflüssigkeit aus dem Vorratsraum 103 zum Arbeitsbereich des Trennelementes 102 überführt werden kann. Dieses Betätigungselement 113 arbeitet nach dem Prinzip einer Zerstäuberpumpe bzw. eines Dosierspenders und besitzt hierzu einen Druckknopf 114, der vorzugsweise stirnseitig am ersten Rohrende 105 angeordnet ist. Hierdurch ist der Druckknopf 114 sehr gut und komfortabel mit dem Daumen derjenigen Hand erreichbar, die den Handgriff 104 führt.

Gemäß Fig. 3 weist der Handgriff 104 weiterhin eine mit einem Verschlußstück 115 mediendicht verschließbare Füllöffnung auf, die insbesondere stirnseitig am zweiten Rohrende 107 angeordnet ist. Der Handgriff 104 weist dabei in diesem Bereich zweckmäßigerweise Befestigungsmittel 116 zur unverlierbaren Halterung des Verschlußstückes 115 auf.

Das Anschlußstück 107 ist derart am Gehäuse 108 angeordnet, daß eine Längsachse Y-Y des Zuführkanals 109 parallel zur Rotationsachse X-X des Trennelements 102 verläuft. Innerhalb des Gehäuses 108 des Antriebsteils 101 ist im Bereich eines Griffußes 117 am Zuführkanal 109 ein Anschluß 118 für einen gehäuseinternen (nicht dargestellten) Zuführschlauch angeordnet, der zum Zuführen der Schneidflüssigkeit in den Arbeitsbereich am Umfang des Trennelementes 102 dient. Der Zuführschlauch ist einerseits an den Anschluß 118 des Zuführkanales 109 und andererseits an eine Hohlwelle 119 zum Antrieb des Trennelementes 102 angeschlossen. Die Hohlwelle 119 besitzt im Bereich des Trennelementes 102 mindestens eine radiale Ausströmöffnung für die Schneidflüssigkeit.

Das Anschlußstück 107 kann auch derart am Gehäuse 108 angeordnet sein, daß die Längsachse Y-Y des Zuführkanals 109 und die Rotationsachse X-X des Trennelements 102 miteinander fluchten. Auf diese Weise kann der gehäuseinterne Zuführschlauch kürzer ausgebildet sein bzw. er kann ganz entfallen, da die Schneidflüssigkeit aus dem Zuführkanal 109 direkt in die Hohlwelle 119 gelangen kann.

Bei der bevorzugten Ausführungsform mit Doppel-Kreissägeblatt sind zwei gegensinnig rotierende Antriebswellen vorgesehen, durch die hindurch sich ein axialer Kanal erstreckt, über den die Schneidflüssigkeit derart vom Zentrum her zwischen die Teilsägeblätter 102a, 102b zugeführt wird, daß sie nachfolgend selbsttätig fliehkraftbedingt zwischen den Teilsägeblättern 102a, 102b radial nach außen in den Arbeitsbereich gelangt.

Vorteilhafterweise ist in die Einrichtung zum Zuführen der Schneidflüssigkeit aus dem Vorratsraum 103 in den Arbeitsbereich am Umfang des Trennelementes 102 ein, insbesondere im Übergangsbereich des Zuführkanals 109 in das Gehäuse 108, d.h. im Bereich des Griffußes 17 befindliches, Rückschlagventil 120 integriert, wodurch eine eventuelle Rücksaugwirkung des Betätigungselementes 113 zur Dosierung der Schneidflüssigkeit kompensiert werden kann.

Wie Fig. 3 und 4 verdeutlichen, ist der Handgriff 104 im Bereich seines Griffußes 117 mit dem Gehäuse 108 verbunden. In der dargestellten Ausführung befinden sich im Griffuß 117 zwei Öffnungen 121, die zur Befestigung des Handgriffes 104 mittels eines Schraubbolzens 122 o.dgl. in einer korrespondierenden, nicht näher bezeichneten Öffnung des Gehäuses 108 dienen. Die Öffnungen 121 im Griffuß 117 liegen beidseitig des Zuführkanals 109 auf einer Linie (vgl. Fig. 4), so daß der Handgriff 104 in zwei verschiedenen, um 180° gegeneinander verdrehten Montagestellungen am Gehäuse 108 des Antriebsteils 1 befestigbar ist. Bedarfsweise könnten auch weitere oder in einem anderen Winkel zueinander stehende, derartige Montagestellungen für den Handgriff 104 vorgesehen sein.

Wie die Zeichnung des weiteren erkennen läßt, weist der Griffuß 117 zusätzlich Zentrier- und Halteelemente 123 auf, die ebenfalls - jedoch nur formschlüssig - in korrespondierende Öffnungen im Gehäuse 8 eingreifen.

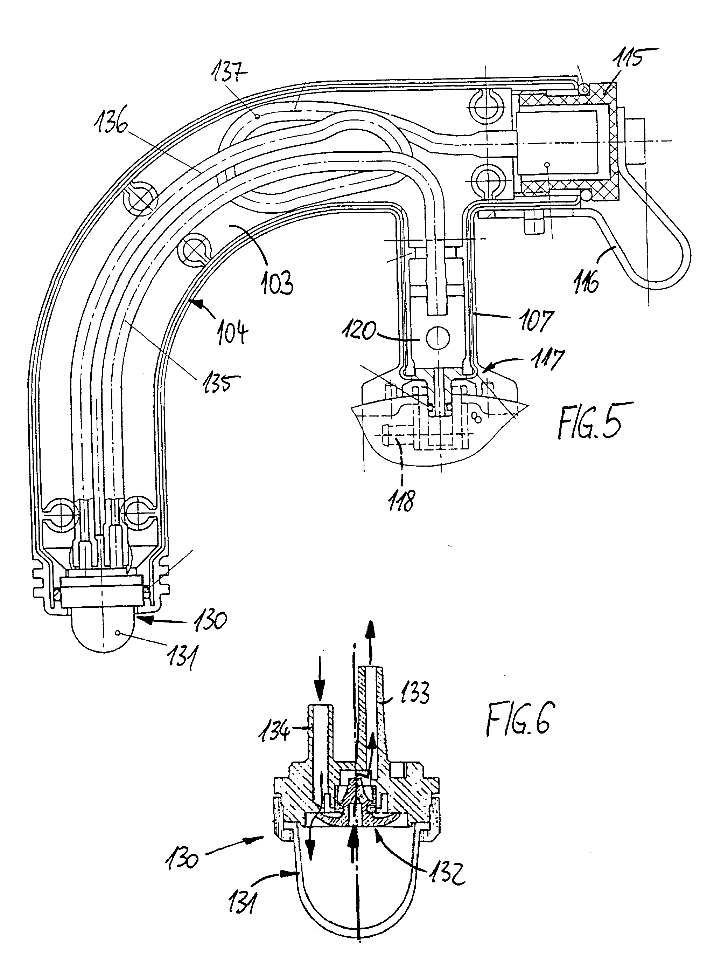

Was nun noch die Fig. 5 und 6 betrifft, so entspricht diese Ausführungsform weitgehend der Ausführung nach Fig. 3 und 4, so daß entsprechende Bezugszeichen verwendet wurden. Unterschiedlich ist die Art der hier verwendeten Druckpumpe, wobei es sich um eine in Fig. 6 veranschaulichte, an sich bekannte Membranpumpe 130 handelt. Diese Membranpumpe 130 besitzt als Betätigungselement eine elastische, etwa kuppelförmige Membran 131 sowie eine integrierte Rückschlagventilanordnung 132, die praktisch aus zwei einzelnen, in entgegengesetzten Richtungen wirksamen Rückschlagventilen besteht. Ein von der Membran 131 gebildeter Hohlraum läßt sich bezüglich seines Volumens durch Druck auf die Membran 131 verkleinern, so daß das innerhalb der Membran 131 vorhandene Medium über die Rückschlagventilanordnung 132 und einen Druckanschluß 133 hinausgepumpt wird. Nachfolgend wird aufgrund der Elastizität der Membran 131 der von ihr gebildete Hohlraum selbstätig wieder vergrößert, wodurch über einen Ansauganschluß 134 und die Ventilanordnung 132 Medium angesaugt wird. Mit dem Druckanschluß 133 ist ein Zuführschlauch 135 verbunden, der innerhalb des Handgriffs 104 zum Antriebsteil 101 führt. Mit dem Ansauganschluß 134 ist ein Ansaugschlauch 136 verbunden, der auf seiner anderen Seite mit dem Verschlußstück 115 verbunden ist. Bei bestimmungsgemäßer Haltung des Gerätes sammelt sich das im Vorratsraum 103 enthaltene Medium schwerkraftbedingt im Bereich des Verschlußstückes 115, so daß es jedenfalls über den Ansaugschlauch 136 angesaugt werden kann. Um ein Öffnen des Vorratsraums 103 durch Entnahme des Verschlußstückes 115 zu ermöglichen, ist der Ansaugschlauch 136 durch eine innere Schlaufenbildung 137 verlängert.

Die Erfindung ist nicht auf die dargestellten und beschriebenen Ausführungsbeispiele beschränkt, sondern umfaßt auch alle im Sinne der Erfindung gleichwirkenden Ausführungen. Beispielsweise könnte das eine Rohrende 106 selbst das am Gehäuse 108 befestigte Anschlußstück 107 mit dem Zuführkanl 109 bilden. Die Füllöffnung könnte in diesem Fall an einer geeigneten anderen Stelle des Handgriffs 104 vorgesehen werden. Auch kann eine Anordnung des Anschlußstücks 107 in einem mittleren Bereich des Handgriffs konzipiert werden.

## Patentansprüche

1. Handführbares Trenngerät (1), insbesondere Handkreissäge, mit einem motorischen Antriebsteil (2, 101) und einem kreisscheibenförmigen, rotierend antreibbaren Trennelement (4, 102) sowie mit einer Einrichtung zum Zuführen einer Schneidflüssigkeit aus einem Vorratsraum (10, 103) in einen Arbeitsbereich am Umfang des Trennelementes (4, 102), wobei der Vorratsraum (10, 103) für die Schneidflüssigkeit in einen Handgriff (12, 104) des Antriebsteils (2, 101) integriert ist,
**dadurch gekennzeichnet,**
**daß** der Handgriff (12, 104) eine integrierte Druckpumpe mit einem Betätigungselement (30, 113, 131) zum bedarfsweisen Überführen jeweils einer bestimmten, dosierten Portion der Schneidflüssigkeit aus dem integrierten Vorratsraum (10, 103) zum Arbeitsbereich des Trennelementes (4, 102) aufweist, wobei die Einrichtung zum Zuführen der Schneidflüssigkeit ein integriertes Rückschlagventil (120, 132) derart aufweist, daß eine eventuelle Rücksaugwirkung der Druckpumpe zur Dosierung der Schneidflüssigkeit kompensiert wird.

2. Trenngerät nach Anspruch 1,
**dadurch gekennzeichnet,**
**daß** das Betätigungselement (30,113) ein Druckknopf (32, 114) ist, der vorzugsweise an einem freien Griffende (22, 105) angeordnet ist.

3. Trenngerät nach Anspruch 1,
**dadurch gekennzeichnet,**
**daß** das Betätigungselement eine elastische, etwa kuppelförmige Membran (131) der als Membranpumpe (130) ausgebildeten Druckpumpe ist.

4. Trenngerät nach einem der Ansprüche 1 bis 3,
**dadurch gekennzeichnet,**
**daß** der Handgriff (12, 104) von einem außen an einem Gehäuse (18, 108) des Antriebsteils (2, 101) befestigten Rohrstück (14) gebildet ist, dessen Rohr-Innenvolumen den Vorratsraum (10, 103) bildet.

5. Trenngerät nach einem der Ansprüche 1 bis 4,
**dadurch gekennzeichnet,**
**daß** der Handgriff (12, 104) in der Nähe des Trennelementes (4, 102) angeordnet ist, wobei sich ein erster Griffabschnitt (20, 110) ausgehend von seinem ersten, in der Nähe des Außenumfanges des Trennelementes (4, 102) liegenden Griffende (22, 105) etwa parallel zu einer Rotationsachse des Trennelementes (4, 102) von diesem weg erstreckt und vorzugsweise über eine Biegung (24, 111) in einen sich senkrecht zur Rotationsachse erstreckenden, insbesondere etwa diametral zum Trennelement (4, 102) verlaufenden zweiten Griffabschnitt (26, 112) übergeht.

6. Trenngerät nach Anspruch 5,
**dadurch gekennzeichnet,**
**daß** der Handgriff (12) im Bereich seines ersten Griffendes (22) über ein Halteteil (16) am Gehäuse (18) befestigt ist, während der zweite Griffabschnitt (26) in einem freien Griffende (28) ausläuft.

7. Trenngerät nach Anspruch 5,
**dadurch gekennzeichnet,**
**daß** der Handgriff (104) über ein Anschlußstück (107), welches einen mit dem Vorratsraum (103) verbundenen Zuführkanal (109) für die Schneidflüssigkeit aufweist, am Gebäuse (108) des Antriebsteils (101) befestigt ist.

8. Trenngerät nach Anspruch 7,
**dadurch gekennzeichnet,**
**daß** der erste Griffabschnitt (110) in ein freies Rohrende (105) ausläuft, während der Handgriff (104) im Bereich seines zweiten Griffabschnittes (112) im Bereich des anderen Rohrendes (106) über das Anschlußstück (107) am Gehäuse (108) befestigt ist.

9. Trenngerät nach einem der Ansprüche 1 bis 8,
**dadurch gekennzeichnet,**
**daß** der Handgriff (12, 104) - insbesondere stirnseitig an seinem freien Griffende (28) oder im Bereich des am Gehäuse (108) befestigten Rohrendes (106) - eine mit einem Verschlußstück (34, 115) verschließbare Füllöffnung aufweist.

10. Trenngerät nach Anspruch 9,
**dadurch gekennzeichnet,**
**daß** der Handgriff (104) Befestigungsmittel (116) zur unverlierbaren Halterung des Verschlußstückes (115) aufweist.

11. Trenngerät nach einem der Ansprüche 5 bis 10,
**dadurch gekennzeichnet,**
**daß** eine Längsachse (Y-Y) des Zuführkanals (109) parallel zur Rotationsachse (X-X) verläuft und innerhalb des Gehäuses (108) des Antriebsteils (101) im Bereich eines Grifffußes (117) am Zuführkanal (108) ein Anschluß (118) für einen geräteinternen Zuführschlauch angeordnet ist, der zum Zuführen der Schneidflüssigkeit in den Arbeitsbereich am Umfang des Trennelementes (102) dient.

12. Trenngerät nach Anspruch 11,
**dadurch gekennzeichnet,**
**daß** der Zuführschlauch an eine Hohlweife (119) zum Antrieb des Trennelementes (102) angeschlossen ist, die mindestens eine radiale Ausströmöffnung im Bereich des Trennelementes (102) aufweist.

13. Trenngerät nach einem der Ansprüche 1 bis 12,
**dadurch gekennzeichnet,**
**daß** das Trennelement (4, 102) als Doppel-Kreissägeblatt aus zwei parallelen, gegensinnig rotierenden Teilsägeblättern (102a, 102b) ausgebildet ist, wobei die Schneidflüssigkeit derart vom Zentrum her zwischen die Teilsägeblätter (102a, 102b) zugeführt wird, daß sie selbsttätig fliehkraftbedingt nach außen in den Arbeitsbereich gelangt.

14. Trenngerät nach einen der Ansprüche 1 bis 13,
**dadurch gekennzeichnet,**
**daß** das Rückschlagventil (120) im Übergangsbereich des Zuführkanals (109) in das Gehäuse (108) angeordnet ist.

15. Trenngerät nach einem der Ansprüche 1 bis 14,
**dadurch gekennzeichnet,**
**daß** der Handgriff (114) in mindestens zwei, vorzugsweise um 180°, gegeneinander verdrehten Montagestellungen am Gehäuse (108) des Antriebsteils (101) befestigbar ist.

16. Trenngerät nach einem der Ansprüche 1 bis 15,
**dadurch gekennzeichnet,**
**daß** der Handgriff (104) als Kunststoff-Spritzguß- oder als Leichtmetall-Druckguß-Teil, insbesondere aus zwei miteinander lösbar verbundenen Schalenhälften, gebildet ist.

## Claims

1. Hand-guided cutting device (1), in particular a handheld circular saw, having a motor drive part (2,101) and a cutting element (4,102) that is shaped like a circular disc and driven in rotation, and having a device for supplying a cutting fluid from a reservoir (10,103) into a working area at the circumference of the cutting element (4,102), the reservoir (10,103) for the cutting fluid being integrated into a handle (12,104) of the drive part (2,101), **characterized in that** the handle (12,104) has an integrated pressure pump having an actuating element (30,113,131) for transferring in each case a specific, metered portion of the cutting fluid from the integrated reservoir (10,103) to the working area of the cutting element (4,102) as required, the device for supplying the cutting fluid having an integrated non-return valve (120,132) in such a way that any possible reverse sucking action of the pressure pump for metering the cutting fluid is compensated for.

2. Cutting device according to Claim 1, **characterized in that** the actuating element (30,113), is a pushbutton (32,114) which is preferably arranged at a free handle end (22,105).

3. Cutting device according to Claim 1, **characterized in that** the actuating element is a resilient, approximately dome-shaped diaphragm (131), which is a pressure pump designed as a diaphragm pump (130).

4. Cutting device according to one of Claims 1 to 3, **characterized in that** the handle (12,104) is formed by a tubular piece (14) which is fastened to the outside of a housing (18,108) of the drive part (2,101) and whose tubular inner volume forms the reservoir (10, 103).

5. Cutting device according to one of Claims 1 to 4, **characterized in that** the handle (12,104) is arranged in the vicinity, of the cutting element (4,102), a first grip section (20,110), starting from its first grip end (22,105) located in the vicinity of the outer circumference of the cutting element (4,102), extending away from said end, approximately parallel to an axis of rotation of the cutting element (4,102), and preferably merging, via a bend (24,111), into a second grip section (26,112) extending at right angles to the axis of rotation, in particular nunning approximately diametrically relative to the cutting element (4,102).

6. Cutting device according to Claim 5, **characterized in that**, in the region of its first grip end (22), the handle (12) is fixed to the housing (18) via a holding part (16), while the second grip section (26) runs out in a free grip end (28).

7. Cutting device according to Claim 5, **characterized in that** the handle (104) is fixed to the housing (108) of the drive part (101) via a connecting piece (107), which has a feed channel (109) connected to the reservoir (103) for the cutting fluid.

8. Cutting device according to Claim 7, **characterized in that** the first grip section (110) runs out into a free tubular end (105), while, in the area of its second grip section (112), the handle (104) is fixed to the housing (108) via the connecting piece (107) in the area of the other tubular end (106).

9. Cutting device according to one of Claims 1 to 8, **characterised in that** the handle (12,104) - in particular at the end, at its free grip end (28) or in the area of the tubular end (106) fixed to the housing (108) - has a filling opening that can be closed by a closure piece (34,115).

10. Cutting device according to Claim 9, **characterized in that** the handle (104) has fixing means (116) for the captive retention of the closure piece (115).

11. Cutting device according to one of Claims 5 to 10, **characterized in that** a longitudinal axis (Y-Y) of the feed channel (109) runs parallel to the axis of rotation (X-X) and, inside the housing (108) of the drive part (101), in the area of a bottom of the grip (117), a connection (118) for a feed hose internal to the device is arranged on the feed channel (109), and as used to supply the cutting fluid into the working area at the circumference of the cutting element (102).

12. Cutting device according to Claim 11, **characterized in that** the feed hose is connected to a hollow shaft (119) for driving the cutting element (102), the said shaft having at least one radial outflow opening in the area of the cutting element (102).

13. Cutting device according to one of Claims 1 to 12, **characterized in that** the cutting element (4,102) is constructed as double circular saw blade comprising two parallel part saw blades (102a, 102b) rotating in opposite directions, the cutting fluid being supplied from the centre between the part saw blades (102a, 102b) in such a way that it automatically passes outwards into the working area under the action of centrifugal force.

14. Cutting device according to one of Claims 1 to 13, **characterized in that** the non-return valve (120) is arranged in the transition area of the feed channel (109) into the housing (108).

15. Cutting device according to one of Claims 1 to 14, **characterized in that** the handle (114) can be fixed to the housing (108) of the drive part (101) in at least two mounting positions, preferably rotatad through 180° with respect to each other.

16. Cutting device according to one of Claims 1 to 15, **characterized in that** the handle (104) is formed as a plastic injection moulding or a lightweight metal pressure dye casting, in particular of two half-shells detachably connected to each other.

## Revendications

1. Appareil de coupe (1) guidé à la main, en particulier scie circulaire à main comprenant une partie d'entraînement à moteur (2, 101) et un élément de coupe (4, 102) en forme de disque circulaire, entraîné en rotation, ainsi qu'un dispositif pour acheminer un liquide de coupe d'un espace réservoir (10, 103) à une zone de travail située à la périphérie de l'élément de coupe (4, 102), l'espace réservoir (10, 103) destiné au liquide de coupe étant intégré dans une poignée (12, 104) de la partie d'entraînement (2, 101),
**caractérisé en ce que** la poignée (12, 104) renferme une pompe à pression intégrée qui comprend un élément d'actionnement (30, 113, 131) pour envoyer selon le besoin une portion déterminée, dosée, du liquide de coupe de l'espace réservoir intégré (10, 103) à la zone de travail de l'élément de coupe (4, 102), le dispositif pour acheminer le liquide de coupe présentant un clapet anti-retour intégré (120, 132) de telle manière qu'un éventuel effet de réaspiration de la pompe à pression pour le dosage du liquide de coupe soit compensé.

2. Appareil de coupe selon la revendication 1,
**caractérisé en ce que** l'élément d'actionnement (30, 113) est un bouton poussoir (32, 114) qui est de préférence monté à une extrémité libre (22, 105) de la poignée.

3. Appareil de coupe selon la revendication 1,
**caractérisé en ce que** l'élément d'actionnement est une membrane élastique (131) à peu près en forme de coupole, de la pompe à pression constituée par une pompe à membrane (130).

4. Appareil de coupe selon une des revendications 1 à 3,
**caractérisé en ce que** la poignée (12, 104) est formée d'un tronçon de tube (14) fixé extérieurement à un carter (18, 108) de la partie d'entraînement (2, 101) et dont le volume intérieur forme l'espace réservoir (10, 103).

5. Appareil de coupe selon une des revendications 1 à 4,
**caractérisé en ce que** la poignée (12, 104) est disposée dans le voisinage de l'élément de coupe (4, 102), un premier segment (20, 105) de la poignée s'étendant, à partir de sa première extrémité (22, 105) qui se trouve dans le voisinage de la périphérie extérieure de l'élément de coupe (4, 102), à peu près parallèlement à un axe de rotation de l'élément de coupe (4, 102), dans le sens qui s'éloigne de cet élément, et se termine, de préférence par l'intermédiaire d'un coude (24, 111), dans un deuxième segment (26, 112) de la poignée qui s'étend perpendiculairement à l'axe de rotation, en particulier à peu près diamétralement par rapport à l'élément de coupe (4, 102).

6. Appareil de coupe selon la revendication 5,
**caractérisé en ce que** la poignée (12) est fixée au carter (18) dans la région de sa première extrémité (22), par l'intermédiaire d'un élément de support (16), tandis que le deuxième segment (26) de la poignée se termine dans une extrémité libre (25) de la poignée.

7. Appareil de coupe selon la revendication 5,
**caractérisé en ce que** la poignée (104) est fixée au carter (108) de la partie d'entraînement (101) par l'intermédiaire d'une pièce de raccordement (107) qui présente un canal d'acheminement (109) pour le liquide de coupe, qui est relié à l'espace réservoir (103).

8. Appareil de coupe selon la revendication 7,
**caractérisé en ce que** le premier segment (110) de la poignée se termine par une extrémité libre (105) du tube, tandis que, dans la région de son deuxième segment de poignée (112), la poignée (104) est fixée au carter (108) par l'intermédiaire de l'élément de raccordement (107), dans la région de l'autre extrémité (106) du tube.

9. Appareil de coupe selon une des revendications 1 à 8,
**caractérisé en ce que** la poignée (12, 104) présente - en particulier côté frontal, à son extrémité libre (28) ou dans la région de l'extrémité (106) du tube qui est fixée au carter (108) - une ouverture de remplissage qui peut être obturée à l'aide d'un obturateur (34, 115).

10. Appareil de coupe selon la revendication 9,
**caractérisé en ce que** la poignée (104) présente des moyens de fixation (116) pour la retenue imperdable de l'obturateur (115).

11. Appareil de coupe selon une des revendications 5 à 10,
**caractérisé en ce qu'**un axe longitudinal (Y-Y) du canal d'acheminement (109) s'étend parallèlement à l'axe de rotation (X-X) et, à l'intérieur du carter (108) de la partie d'entraînement (101), est disposé, dans la région d'un pied de poignée (117), sur le canal d'acheminement (108), un raccord (118) pour un tuyau d'acheminement intérieur à l'appareil, qui sert à acheminer le liquide de coupe à la zone de travail à la périphérie de l'élément de coupe (102).

12. Appareil de coupe selon la revendication 11,
**caractérisé en ce que** le tuyau d'acheminent est raccordé à un arbre creux (119) servant pour l'entraînement de l'élément de coupe (102) et qui présente au moins une ouverture de sortie radiale dans la région de l'élément de coupe (102).

13. Appareil de coupe selon une des revendications 1 à 12,
**caractérisé en ce que** l'élément de coupe (4, 102) constituant une lame de scie circulaire double est formé de deux lames de scie partielles parallèles (102a, 102b), tournant l'une en sens inverse de l'autre, le liquide de coupe étant acheminé à partir du centre entre les lames de scie partielles (102a, 102b) de manière qu'il parvienne automatiquement dans la zone de travail en s'écoulant vers l'extérieur sous l'effet de la force centrifuge,.

14. Appareil de coupe selon une des revendications 1 à 13,
**caractérisé en ce que** le clapet anti-retour (120) est disposé dans la région du raccordement du canal d'acheminement (109) au carter (108).

15. Appareil de coupe selon une des revendications 1 à 14,
**caractérisé en ce que** la poignée (114) peut être fixée au carter (108) de la partie d'entraînement (101) en au moins deux positions de montage qui sont tournées l'une par rapport à l'autre, de préférence de 180°.

16. Appareil de coupe selon une des revendications 1 à 15,
**caractérisé en ce que** la poignée (104) est formée d'une pièce de matière plastique moulée par injection ou d'une pièce de métal léger coulé sous pression, en particulier de deux demi-coques pouvant être assemblées l'une à l'autre de façon séparable.
